# EUROPÄISCHE PATENTANMELDUNG

(11) **EP 1 122 623 A2**
(43) Veröffentlichungstag der Anmeldung: **08.08.2001**
(21) Anmeldenummer: 01250009.6
(22) Anmeldetag: 08.01.2001
(51) Int. Cl.: G05B 19/05

(54) **Überwachungs- und Steuerungssystem, insbesondere für mobile Geräte**

(30) Priorität: 03.02.2000 DE 10004861
(71) Anmelder: Atecs Mannesmann AG, 40213 Düsseldorf (DE)
(72) Erfinder: Franzke, Urban, 40789 Monheim (DE); Kruschinski, Andreas, 40468 Düsseldorf (DE); van de Loo, Arno, 40699 Erkrath (DE); Reiss, Johannes, 40721 Hilden (DE); Weyl, Horst, 40668 Meerbusch (DE)
(74) Vertreter: Meissner, Peter E., Dipl.-Ing.

(57) **Zusammenfassung**

Die Erfindung betrifft ein Überwachungs- und Steuerungssystem, insbesondere für mobile Geräte wie Krane, Baumaschinen, Transportfahrzeuge, bei dem durch Überwachung ausgewählter Gerätekomponenten gewonnene Zustandsdaten, gegebenenfalls mit Hilfe einer Datenfernübertragung, mindestens einem Leitstand übermittelt werden und Daten und/oder Steuerbefehle von dem Leitstand an das Überwachungs- und Steuerungssystem übertragen werden,
dadurch gekennzeichnet,
dass das System mit einer offenen erweiterbaren Architektur aus austauschbaren Standard PC-Komponenten unter Einsatz eines Echtzeitbetriebssystems für harte Echtzeit und mit einem durch den Einsatz eines SPS-Programmiertools nach IEC 1131-3 herstellerunabhängigen Anwenderprogramm betrieben wird.

## Beschreibung

Die Erfindung betrifft ein Überwachungs- und Steuerungssystem, insbesondere für mobile Geräte wie Krane, Baumaschinen, Transportfahrzeuge o. ä., bei dem durch Überwachung ausgewählter Gerätekomponenten gewonnene Zustandsdaten mindestens einem Leitstand übermittelt werden und Daten und /oder Steuerbefehle von dem Leitstand an das Überwachungs- und Steuerungssystem übertragen werden, wobei die Übermittlung der Daten gegebenenfalls mit Hilfe einer Datenfernübertragung erfolgt.

Für die Steuerung von Anlagen wie z.B. Autokrane, Hafenmobilkrane, Bagger, Schienenkrane, Containertransporter, Baumaschinen und ähnliche Geräte werden üblicherweise programmierbare Steuerungen (SPS) bzw. Windows basierende Steuerungen, die als sog. Soft-SPS bekannt sind, eingesetzt.

Diese Lösungen haben den Nachteil, dass die verwendete Hardware herstellerspezifisch ist, so dass bei einem Systemwechsel des Herstellers oder einem Herstellerwechsel grundlegende Anpassungen durchgeführt werden müssen. Auch die Software (Betriebssystem, SPS Programmiertool) ist herstellerspezifisch, so dass dort die gleichen Probleme und Nachteile auftreten. Die Kommunikation mit übergeordneten PC Systemen erfordert herstellerspezifische Treiber; das Anwender-programm ist nicht mit dem anderen Herstellern kompatibel. Schließlich sind auch die einsetzbaren Bussysteme herstellerspezifisch und können nicht mit anderen Bus-systemen kombiniert werden.

Darüber hinaus haben die verwendeten SPS Systeme einen großen Platzbedarf, einen geringen Temperaturbereich, geringe Schutzart und schlechte EMV Eigenschaften.

Auch kann die Soft-SPS ohne zusätzliche Modifikationen von Hard- oder Software keine harte Echtzeit realisieren.

Die Aufgabe der vorliegenden Erfindung besteht darin, ein Überwachungs- und Steuerungssystem der vorstehend beschriebenen Art so zu konzipieren, dass herstellerunabhängige Hard- und Softwarekomponenten verwendet werden können und harte Echtzeit realisierbar ist.

Zur Lösung der Aufgabe wird erfindungsgemäß vorgeschlagen, dass das System mit einer offenen erweiterbaren Architektur aus austauschbaren Standard PC-Komponenten unter Einsatz eines Echtzeit-Betriebssystems für harte Echtzeit und mit einem durch den Einsatz eines SPS-Programmiertools nach IEC 1131-3 herstellerunabhängigen Anwenderprogramm betrieben wird.

Durch Einsatz von Standard PC-Komponenten müssen bei einem Hersteller- oder Systemwechsel keine grundlegenden Anpassungen mehr vorgenommen werden, weil die Komponenten weitgehend kompatibel sind. Für die Kommunikation mit übergeordneten PC Systeme werden keine herstellerspezifischen Treiber benötigt.
Das Echtzeit-Betriebssystem ermöglicht mit dem entsprechenden Programmiertool die Realisierung harter Echtzeit.

Das erfindungsgemäße System kann direkt in bestehende Netzwerke eingebunden werden, des Weiteren sind gemäß der Erfindung Standard PC-Komponenten zur Fernwartung/-diagnose über ein FunkLAN System oder Modem in das System einsetzbar.

Es können mit der Erfindung alle am Markt gängigen Feldbussysteme verwendet werden. Ebenso besteht die Möglichkeit mehrere Bussysteme gleichzeitig einzusetzen.

Nach einem weiteren Merkmal der Erfindung können zur Datensicherheit und zum Einloggen der Leitstelle in die verschiedenen Rechner entsprechende Router zwischengeschaltet werden.

Zum Zweck der Datenhaltung großer Datenmengen wird nach einem anderen ausgestaltenden Merkmal der Erfindung vorgeschlagen, dass auf einem Rechner oder weiteren Rechnern Datenbanken installiert sind.

### Ein Ausführungsbeispiel der Erfindung wird nachfolgend beschrieben:

Wie das Blockschaltbild einer Kransteuerung zeigt, wird bei dem erfindungsgemäßen Steuerungs/Rechnerkonzeption ein Industrie-PC, vornehmlich PC 104, mit einem Echtzeit-Betriebssystem eingesetzt, das für die Steuerungsaufgaben eine Programmieroberfläche nach IEC 1131.3 verwendet. Dieser Industrie-PC kommuniziert mit der dezentralen I/O-Ebene über die beiden Bussysteme 5 und 6. Außerdem kommuniziert dieser Industrie-PC 1 über ein anderes Bussystem 4 (TCP/IP) mit mindestens einem anderen Industrie-PC 2 für die Bedienerführung und die Visualisierung. An das Bussystem 4 können weitere Rechner 3 (Industrie-PC) angeschlossen werden, z. B. für Detailaufgaben wie Lastmomentbegrenzer oder Reglerapplikationen oder als Datenspeicher. Außerdem zeigt das Blockschaltbild Anbindungen 7 an ein lokales Funknetz oder Anbindungen 8 an das ISDN-Netz für Teleservice (einschließlich der Datenübertragung zum Ändern von Parametern oder zum Update der Software) und schließlich Anbindungen 9 an einen Router, um sich von dem in diesem Blockschaltbild nicht dargestellten Leitstand in die verschiedenen Rechner 1, 2, 3 einloggen zu können. Der Rechner 1 realisiert über seine lokalen I/O's in Verbindung mit einem Akkusatz eine USV-Anlage. Über die COM-Schnittstelle ist der Rechner 1 mit dem Rechner 2 verbunden. Rechner 1 signalisiert dem Rechner 2 den Shutdown zu fahren. Sobald Rechner 2 die Rückmeldung an Rechner 1 gegeben hat, schaltet Rechner 1 die Anlage aus.

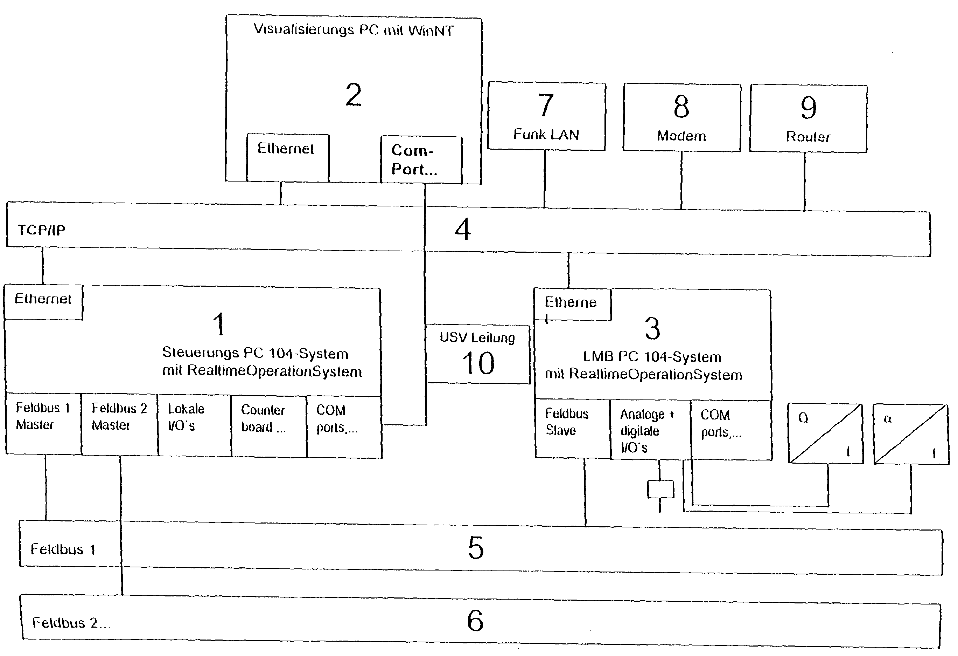

## Patentansprüche

1. Überwachungs- und Steuerungssystem, insbesondere für mobile Geräte wie Krane, Baumaschinen, Transportfahrzeuge, bei dem durch Überwachung ausgewählter Gerätekomponenten gewonnene Zustandsdaten, gegebenenfalls mit Hilfe einer Datenfernübertragung, mindestens einem Leitstand übermittelt werden und Daten und/oder Steuerbefehle von dem Leitstand an das Überwachungs- und Steuerungssystem übertragen werden,
dadurch gekennzeichnet,
dass das System mit einer offenen erweiterbaren Architektur aus austauschbaren Standard PC-Komponenten unter Einsatz eines Echtzeitbetriebssystems für harte Echtzeit und mit einem durch den Einsatz eines SPS-Programmiertools nach IEC 1131-3 herstellerunabhängigen Anwender-programm betrieben wird.

2. Überwachungs- und Steuerungssystem nach Anspruch 1,
dadurch gekennzeichnet,
dass das System direkt in bestehende Netzwerke einbindbar ist.

3. Überwachungs- und Steuerungssystem nach Anspruch 1 oder 2,
dadurch gekennzeichnet,
dass Standard PC-Komponenten zur Fernwartung/-diagnose über ein FunkLAN System oder Modem in das System einsetzbar sind.

4. Überwachungs- und Steuerungssystem nach Anspruch 1 bis 3,
dadurch gekennzeichnet,
dass gängige Feldbussysteme oder mehrere Bussysteme gleichzeitig einsetzbar sind.

5. Überwachungs- und Steuerungssystem nach Anspruch 1 bis 4,
dadurch gekennzeichnet,
dass auf einem oder weiteren Rechnern Datenbanken installiert sind.

6. Überwachungs- und Steuerungssystem nach Anspruch 1 bis 4,
dadurch gekennzeichnet,
dass als Echtzeit-Betriebssystem QNX oder VxWorks eingesetzt wird.
